# EUROPÄISCHE PATENTSCHRIFT

(11) **EP 0 794 416 B1**
(45) Veröffentlichungstag und Bekanntmachung des Hinweises auf die Patenterteilung: **11.09.2002**
(21) Anmeldenummer: 97103442.6
(22) Anmeldetag: 03.03.1997
(51) Int. Cl.: G01K 5/32

(54) **Mechanisch-elektrisches Kombinationsthermometer**
Combined mechanical-electrical thermometer
Thermomètre combiné mécanique-électrique

(30) Priorität: 09.03.1996 DE 19609203
(43) Veröffentlichungstag der Anmeldung: 10.09.1997
(73) Patentinhaber: Messko Albert Hauser GmbH & Co. KG, 61440 Oberursel/Taunus (DE)
(72) Erfinder: Urich, Manfred, Dipl.-Ing., 61250 Usingen (DE)
(74) Vertreter: Meier, Gerald Heinz

(56) Entgegenhaltungen:
- DE-A- 2 943 621
- DE-A- 4 124 142
- DE-U- 9 011 257
- DE-U- 9 209 083
- GB-A- 1 299 683
- US-A- 2 341 765

## Beschreibung

Die Erfindung betrifft ein Thermometer mit einem hohlen Meßfühler, dessen Hohlraum durch ein Kapillarrohr mit dem Hohlraum eines mechanischen Meßwandlers, insbesondere einer Bourdonfeder, verbunden ist, wobei der Meßfühler, das Kapillarrohr und der mechanische Meßwandler mit einem Medium gefüllt sind, dessen Druck sich in Abhängigkeit von der Temperatur ändert und wobei der mechanische Meßwandler eine mechanische Anzeigevorrichtung und/oder Schalter betätigt.

Thermometer der angegebenen Art sind allgemein bekannt und werden vielfach als Federthermometer bezeichnet. Je nach der Art des Mediums, mit dem sie gefüllt sind, unterscheidet man Flüssigkeits-Federthermometer, Dampfdruck-Federthermometer und Gas-Federthermometer. Der robuste mechanische Aufbau derartiger Thermometer gewährleistet ein hohes Maß an Zuverlässigkeit und eine außerordentlich lange Lebensdauer. Die Thermometer finden daher Anwendung in Kraftwerken, Umspannwerken und vergleichbaren Anlagen, die hohe Anforderungen an die Zuverlässigkeit und Lebensdauer stellen. Als nachteilig wird bei diesen Thermometern angesehen, daß eine Fernübertragung der gemessenen Temperaturen, beispielsweise zu einer zentralen Schaltwarte, nicht möglich ist. Lediglich das Überschreiten bestimmter Grenzwerte wird mit Hilfe von Grenzwertschaltern erfaßt und kann daher auch elektrisch zu einer Schaltwarte übertragen werden. Eine Einrichtung zur Fernübertragung anderer von den Grenzwerten abweichender Temperaturmeßwerte ist nicht vorgesehen.

Aus der DE 90 11 257 U1 ist ein Gasthermometer mit einem Meßwandler bekannt, der eine Gaskammer und ein die Gaskammer begrenzendes Meßelement mit einer Membran aufweist. Auf der der Gaskammer abgekehrten Rückseite der Membran ist eine Dünnfilmanordnung angebracht, die zu einer Meßbrücke geschaltete Dehnungsmeßstreifen sowie zugehörige Kontaktflächen für den Anschluß einer Speise- und Auswerteschaltung hat. Die durch den Druck in der Gaskammer bewirkte Auslenkung der Membran wird auf die Dehnungsmeßsteifen übertragen und verursacht eine elektrische Widerstandsänderung der Dehnungsmeßstreifen, die als Meßsignal für die Temperatur am Meßfühler dient.

Aus GB-A-1 299 683 ist ein Federthermometer bekannt, das zur Fernübertragung einer Zusätzlichen elektrischen Meßwandler im hohlem Meßfühler aufweist.

Der Erfindung liegt die Aufgabe zugrunde, ein Thermometer der eingangs genannten Art derart weiterzubilden, daß zusätzlich zur örtlichen Temperaturanzeige ein zur Fernübertragung geeignetes, den jeweiligen Temperaturmeßwert wiedergebendes Meßsignal zur Verfügung steht.

Erfindungsgemäß wird diese Aufgabe dadurch gelöst, daß an das Kapillarrohr zusätzlich ein elektrischer Meßwandler angeschlossen ist, der eine von einem formsteifen Gehäuse umgebene Meßkammer, eine die Meßkammer begrenzende elektrische Druckmeßzelle und einen an die Druckmeßzelle angeschlossenen elektrischen Meßwertumformer zur Erzeugung eines übertragbaren Signals aufweist.

Die Erfindung beruht auf der Erkenntnis, daß ein zur Fernübertragung geeignetes, temperaturabhängiges elektrisches Signal auf besonders einfache und zuverlässige Weise und ohne Beeinträchtigung der Meßgenauigkeit des vorhandenen Meßsystems mit Hilfe eines zweiten, an das Kapillarrohr angeschlossenen Meßwandlers mit einer Druckmeßzelle gewonnen werden kann, da ein derartiger zusätzlicher Meßwandler nur ein vernachlässigbar geringes zusätzliches Totraumvolumen benötigt und nahezu keine druckabhängigen Volumenänderungen verursacht. Von Vorteil ist auch, daß ein derartiger zweiter Meßwandler sich auch in bereits bestehende Thermometerausführungen ohne Schwierigkeit einbauen läßt, da er lediglich an das Kapillarrohr angeschlossen werden muß, während der vorhandene mechanische Wandler mit der Anzeigevorrichtung und den Grenzwertschaltern in seiner bewährten Ausgestaltung vollkommen unverändert beibehalten werden kann. Der Einbau eines zusätzlichen, den temperaturabhängigen Druck unmittelbar erfassenden elektrischen Meßwandlers hat weiterhin den Vorteil, daß eine zweite, von dem mechanischen Meßwandler unabhängige Temperaturmessung stattfindet, wodurch eine Gegenkontrolle der beiden Meßwandler ermöglicht und eine höhere Ausfallsicherheit erreicht wird.

Nach einem weiteren Vorschlag der Erfindung kann vorgesehen sein, daß das Gehäuse des elektrischen Meßwandlers eine die Meßkammer durchdringende Durchgangsbohrung hat, durch die das Kapillarrohr hindurchgeführt ist, wobei das Kapillarrohr innerhalb der Meßkammer mit einer Öffnung versehen ist und in den beiden beiderseits der Meßkammer liegenden Abschnitten der Durchgangsbohrung durch Löten, Schweißen oder Kleben druckdicht befestigt ist. Diese Weiterbildung der Erfindung ermöglicht mit einfachen Mitteln einen Anschluß der Meßkammer an das Kapillarrohr in dem Bereich zwischen Meßfühler und mechanischem Meßwandler. Die Gestaltung der Anschlüsse an den Enden des Kapillarrohrs kann daher in der üblichen Ausgestaltung bestehen bleiben. Die Herstellung des Anschlusses ist einfach und erfordert keine zusätzlichen Bauteile. Weiterhin kann vorgesehen sein, daß die Meßkammer von einer Gehäusebohrung gebildet ist, die die Durchgangsbohrung kreuzt oder anschneidet und die an einem Ende durch die Druckmeßzelle verschlossen ist. Wird die Gehäusebohrung nach dem Einführen des Kapillarrohrs in die Durchgangsbohrung gebohrt, so kann auf diesem Wege gleichzeitig die Öffnung in dem Kapillarrohr hergestellt werden. Das Kapillarrohr kann auch erst nach der Herstellung der Gehäusebohrung eingesetzt und nachträglich mit Hilfe eines in die Gehäusebohrung eingeführten Schneidwerkzeugs die Öffnung in dem Kapillarrohr hergestellt werden. Das Gehäuse der Meßkammer kann nach einem weiteren Vorschlag der Erfindung Teil eines Trägerelementes sein, an dem der Meßfühler befestigt ist und das zur Halterung des Thermometers an der Meßstelle dient.

Um eine dauerhafte druckdichte Befestigung der Druckmeßzelle zu erreichen, kann die Druckmeßzelle erfindungsgemäß einen metallischen Träger haben, der durch Schweißen oder Löten mit dem ebenfalls aus einem Metall bestehenden Gehäuse verbindbar ist. Die Druckmeßzelle kann erfindungsgemäß ein piezoresistives Meßelement oder ein Meßelement mit einer Meßbrücke aus Dehnungsmeßstreifen haben. Wird ein piezoresistives Meßelement verwendet, so kann diese unmittelbar von dem Medium, dessen Druck sich in Abhängigkeit von der Temperatur ändert, beaufschlagt sein. Es können daher kleine, im Millibar-Bereich liegende Druckänderungen sehr genau und schnell erfaßt werden, wobei es so gut wie keiner Volumenänderung bedarf, um ein gutes Meßsignal zu erhalten. Im Vergleich dazu erfordert ein in Dünnfilmtechnik hergestelltes Meßelement mit einer Meßbrücke aus Dehnungsmeßstreifen eine relativ hohe, im Bar-Bereich liegende Druckänderung, um ein ausreichendes Meßsignal zu erzeugen. Ein solches Meßelement eignet sich daher nur für weniger hohe Anforderungen.

Die Erfindung wird nachfolgend anhand von Ausführungsbeispielen näher erläutert, die in der Zeichnung dargestellt ist. Es zeigen
- Figur 1: eine Vorderansicht eines erfindungsgemäßen Thermometers,
- Figur 2: eine Seitenansicht, teilweise geschnitten, des Thermometers gemäß Figur 1,
- Figur 3: eine vergrößerte Schnittdarstellung eines Ausschnitts X in Figur 2,
- Figur 4: eine Vorderansicht einer weiteren Ausführungsform eines erfindungsgemäßen Thermometers und
- Figur 5: eine Seitenansicht eines Thermometers gemäß Figur 4, teilweise geschnitten.

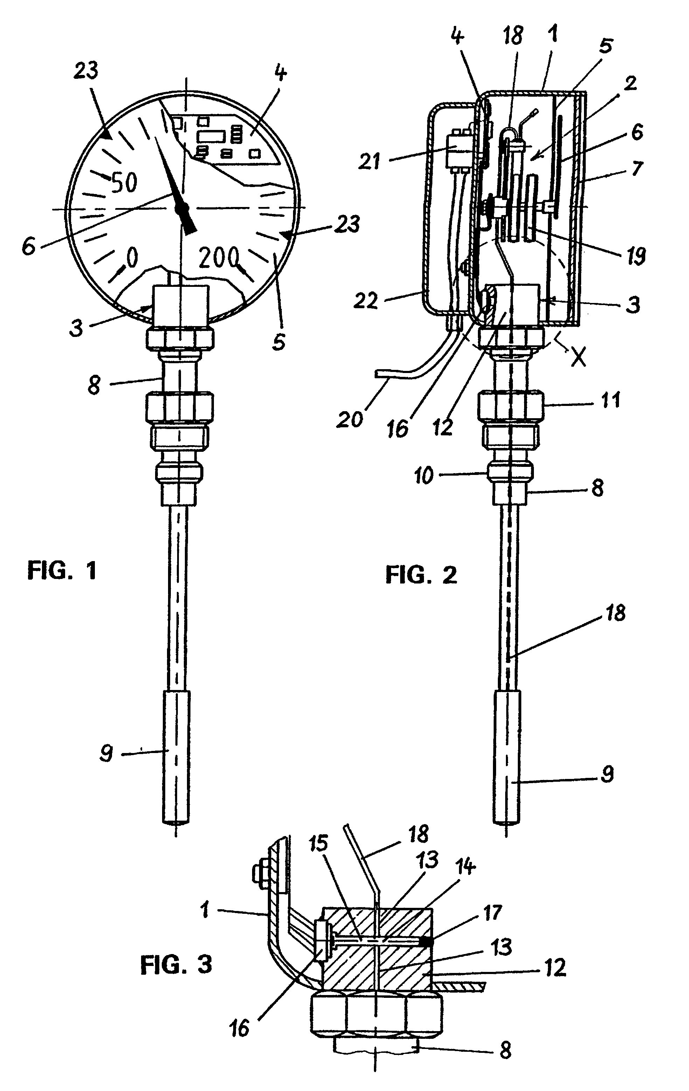

Das in den Figuren 1 bis 3 dargestellte Thermometer besteht aus einem aus Blech geformten, topfförmigen Gehäuse 1, das einen mechanischen Meßwandler 2, einen elektrischen Meßwandler 3, einen elektrischen Meßwertumformer 4, eine Skalenscheibe 5 und einen Zeiger 6 enthält und das mit einer Glasscheibe 7 verschlossen ist. Das Gehäuse 1 ist an einem starren oder flexiblen, rohrförmigen Trägerelement 8 befestigt, das an seinem, dem Gehäuse 1 entgegengesetzten Ende einen hohlen, mit Flüssigkeit gefüllten Meßfühler 9 trägt. Ein an dem Trägerelement 8 ausgebildeter Dichtwulst 10 und eine Überwurfschraube 11 dienen zur Befestigung des Thermometers in einer entsprechend gestalteten Aufnahmebohrung, beispielsweise im Kühlmantel eines Transformators, dessen Temperatur gemessen und überwacht werden soll.

Der Meßwandler 3 weist ein metallisches Gehäuse 12 auf, das in Verlängerung des Trägerelements 8 innerhalb des Gehäuses 1 angeordnet und mit dem Trägerelement 8 verbunden ist. Das Gehäuse 12 ist mit einer zur Längsachse des Trägerelements 8 koaxialen Durchgangsbohrung 13 und einer die Durchgangsbohrung 13 senkrecht kreuzenden Gehäusebohrung 14 versehen, die eine Meßkammer 15 bildet. Das eine Ende der Gehäusebohrung 14 ist durch eine Druckmeßzelle 16 verschlossen, die durch Löten oder Schweißen dicht mit dem Gehäuse 12 verbunden ist. In dem anderen Ende der Gehäusebohrung 14 befindet sich ein Stopfen 17 oder es ist zugeschweißt oder zugelötet. In der Durchgangsbohrung 13 befindet sich ein Kapillarrohr 18, das den Hohlraum des Meßfühlers 9 mit dem Hohlraum einer Bourdonfeder 19 des Meßwandlers 2 verbindet. Das Kapillarrohr 18 ist in die Durchgangsbohrung 13 vollständig eingelötet und innerhalb der Gehäusebohrung 14 unterbrochen, so daß die Gehäusebohrung 14 durch das Kapillarrohr 18 einerseits mit dem Hohlraum des Meßfühlers 9 und andererseits mit dem Hohlraum der Bourdonfeder 19 verbunden ist.

Von der Druckmeßzelle 16 führen elektrische Anschlußleitungen zu dem Meßwertumformer 4. Der Anschluß des Meßwertumformers 4 an eine Anschlußleitung 20 zur Zuführung einer Versorgungsspannung und zur Übertragung des Meßsignals erfolgt über einen Klemmenblock 21, der auf der Rückseite des Gehäuses 1 unter einer Kappe 22 angeordnet ist. Der Klemmenblock 21 weist daneben Anschlüsse für die in Figur 1 schematisch dargestellten mechanischen Grenzwertschalter 23 auf, die durch den mechanischen Meßwandler 2 betätigbar sind.

Die Druckmeßzelle 16 des Meßwandlers 3 kann einen druckempfindlichen Siliziumsensor enthalten, der vier als Meßbrücke geschaltete Widerstände aufweist, deren Widerstandswert sich durch piezoresistiven Effekt linear mit dem Druck in der Meßkammer 15 ändert. Die Widerstandsbrücke wird mit konstantem Strom gespeist und gibt somit ein dem Druck in der Meßkammer proportionales Spannungssignal ab. Der Nullpunktabgleich erfolgt über einen Kompensationswiderstand. Anstelle eines piezoresistiven Sensors kann auch eine in Dünnschichttechnik hergestellte Sensormembran mit einer Meßbrücke aus Dehnungsmeßstreifen verwendet werden.

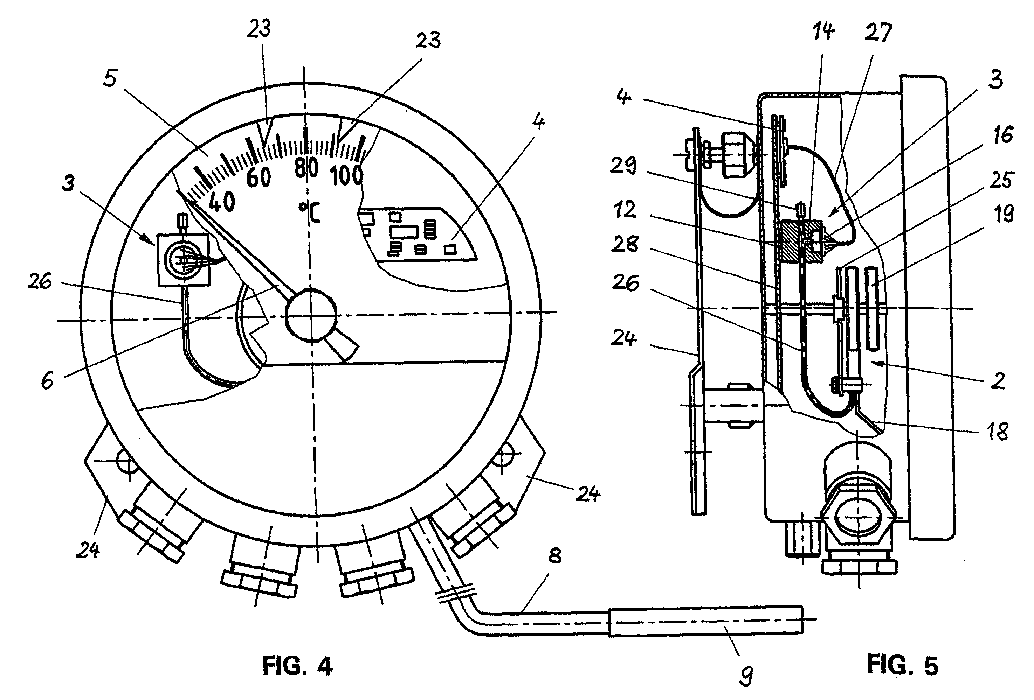

In den Figuren 4 und 5 ist ein Ausführungsbeispiel eines Thermometers dargestellt, das mit dem in den Figuren 1 bis 3 gezeigten Thermometer viele Gemeinsamkeiten hat. Für die einander entsprechenden Bauteile werden daher im folgenden die gleichen Bezugsziffern verwendet.

Das Gehäuse 1 des Thermometers gemäß den Figuren 4 und 5 enthält den mechanischen Meßwandler 2, den elektrischen Meßwandler 3, den Meßwertumformer 4, die Skalenscheibe 5 und den Zeiger 6 und ist auf seiner Rückseite mit einer Befestigungskonsole 24 versehen. Das Thermometer weist einen Meßfühler 9 auf, der am Ende eines flexiblen, rohrförmigen Trägerelements 8 angebracht ist. Das Kapillarrohr 18 ist ebenfalls flexibel und ohne Unterbrechung von dem Meßfühler 9 durch das Trägerelement 8 zur Anschlußstelle der Bourdonfeder 19 geführt, die an einer gehäusefesten Platte 25 gehalten ist. Von der Anschlußstelle der Bourdonfeder 19 zweigt ein kapillares Füllrohr 26 ab, das die Verbindung zu dem elektrischen Meßwandler 3 herstellt. Das Ende des Füllrohrs 26 erstreckt sich durch eine Durchgangsbohrung im Gehäuse 12 des Meßwandlers 3 und ist in dieser durch Löten oder Schweißen druckdicht befestigt. Innerhalb der Durchgangsbohrung ist das Füllrohr 26 unterbrochen oder mit einer Öffnung versehen, wodurch eine Verbindung zu der von der Durchgangsbohrung senkrecht abzweigenden Gehäusebohrung 14 hergestellt ist, deren Ende durch die Druckmeßzelle 16 verschlossen ist. Durch eine elektrische Anschlußleitung 27 ist die Druckmeßzelle 16 mit dem Meßwertumformer 4 verbunden. Das Gehäuse 12 und der Meßwertumformer 4 sind auf einer gemeinsamen Platine 28 im Inneren des Gehäuses 1 befestigt. Das freie, aus dem Gehäuse 12 hervorstehende Ende 29 des Füllrohrs 26 ist nach dem Einfüllen des vorzugsweise flüssigen Mediums zur Erzeugung einer temperaturabhängigen Druckänderung durch Schweißen oder Löten dicht verschlossen.

Der bei diesem Ausführungsbeispiel vorgesehene Anschluß des elektrischen Meßwandlers über das Füllrohr, hat den Vorteil, daß der Fachmann in der räumlichen Anordnung des elektrischen Meßwandlers innerhalb des Gerätegehäuses weniger gebunden ist. Weiterhin ist auf diese Weise die Nachrüstung vorhandener Thermometer mit einem zusätzlichen elektrischen Meßwandler auf einfache Weise möglich.

Die beschriebenen mechanisch-elektrischen Kombinationsthermometer sind einfach und kostengünstig herstellbar und kann sowohl zur Temperaturanzeige vor Ort als auch zur Fernübertragung von Temperaturmeßwerten verwendet werden. Ist eine Fernübertragung nicht gewünscht, so kann zur Kostenreduzierung anstelle der Druckmeßzelle die Meßkammer mit einem Stopfen verschlossen werden. Eine Änderung der übrigen Bauteile ist nicht erforderlich.

## Patentansprüche

1. Thermometer mit einem hohlen Meßfühler (9), dessen Hohlraum durch ein Kapillarrohr (18) mit dem Hohlraum eines mechanischen Meßwandlers, insbesondere einer Bourdonfeder (19), verbunden ist, wobei der Meßfühler (9), das Kapillarrohr (18) und der mechanische Meßwandler mit einem Medium gefüllt sind, dessen Druck sich in Abhängigkeit von der Temperatur ändert und wobei der mechanische Meßwandler eine mechanische Anzeigevorrichtung (5, 6) und/oder Schalter (23) betätigt, **dadurch gekennzeichnet, daß** an das Kapillarrohr (18) oder den Hohlraum des mechanischen Meßwandlers (2) zusätzlich ein elektrischer Meßwandler (3) angeschlossen ist, der eine von einem formsteifen Gehäuse (12) umgebene Meßkammer (15), eine die Meßkammer (15) begrenzende elektrische Druckmeßzelle (16) und einen an die Druckmeßzelle (16) angeschlossenen elektrischen Meßwertumformer (4) zur Erzeugung eines übertragbaren Signals aufweist.

2. Thermometer nach Anspruch 1, **dadurch gekennzeichnet, daß** das Gehäuse (12) des elektrischen Meßwandlers (3) eine die Meßkammer (15) durchdringende Durchgangsbohrung (13) hat, durch die das Kapillarrohr (18) oder ein an den Hohlraum des mechanischen Meßwandlers (2) angeschlossenes Füllrohr (26) hindurchgeführt ist, wobei das Kapillarrohr (18) bzw. das Füllrohr (26) innerhalb der Meßkammer (15) mit einer Öffnung oder Unterbrechung versehen und in den beiden beiderseits der Meßkammer (15) liegenden Abschnitten der Durchgangsbohrung (13) durch Löten, Schweißen oder Kleben druckdicht befestigt ist.

3. Thermometer nach einem der Ansprüche 1 oder 2, **dadurch gekennzeichnet, daß** die Meßkammer (15) von einer Gehäusebohrung (14) gebildet ist, die die Durchgangsbohrung (13) kreuzt oder anschneidet und die an einem Ende durch die Druckmeßzelle (16) verschlossen ist.

4. Thermometer nach einem der vorhergehenden Ansprüche, **dadurch gekennzeichnet, daß** die Gehäusebohrung (14) nach dem Einführen des Kapillarrohrs (18) bzw. des Füllrohrs (26) in die Durchgangsbohrung (13) hergestellt ist.

5. Thermometer nach einem der vorhergehenden Ansprüche, **dadurch gekennzeichnet, daß** das Gehäuse (12) der Meßkammer (15) Teil eines Trägerelementes (8) ist, an dem der Meßfühler (9) befestigt ist.

6. Thermometer nach einem der vorhergehenden Ansprüche, **dadurch gekennzeichnet, daß** die Druckmeßzelle (16) einen metallischen Träger hat, der durch Schweißen oder Löten mit dem ebenfalls aus einem Metall bestehenden Gehäuse (12) verbindbar ist.

7. Thermometer nach einem der vorhergehenden Ansprüche, **dadurch gekennzeichnet, daß** die Druckmeßzelle (16) ein piezoresistives Meßelement oder ein Meßelement mit einer Meßbrücke aus Dehnungsmeßstreifen aufweist.

8. Thermometer nach Anspruch 7, **dadurch gekennzeichnet, daß** das piezoresistive Meßelement unmittelbar mit dem Medium, dessen Druck sich in Abhängigkeit von der Temperatur ändert, beaufschlagt ist.

## Claims

1. Thermometer with a hollow measuring sensor (9), the cavity of which is connected by a capillary tube (18) with the cavity of a mechanical transducer, particularly a Bourdon tube (19), wherein the measuring sensor (9), the capillary tube (18) and the mechanical transducer are filled with a medium, the pressure of which varies in dependence on temperature, and wherein the mechanical transducer actuates a mechanical indicating device (5, 6) and/or switch (23), **characterised in that** an electrical transducer (3) is additionally connected with the capillary tube (18) or the cavity of the mechanical transducer (2) and comprises a measuring chamber (15) surrounded by a rigid housing (12), an electrical pressure measuring cell (16) bounding the measuring chamber (15) and an electrical measurement value converter (4), which is connected with the pressure measuring cell (16), for generating a transmissible signal.

2. Thermometer according to claim 1, **characterised in that** the housing (12) of the electrical transducer (3) has a passage bore (13) which penetrates the measuring chamber (15) and through which the capillary tube (18) or a filling tube (26) connected with the cavity of the mechanical transducer (2) is guided, wherein the capillary tube (18) or the filling tube (26) is provided within the measuring chamber (15) with an opening or interruption and is fastened in pressure-tight manner in the two portions of the passage bore (13) which lie on both sides of the measuring chamber (15), by soldering, welding or gluing.

3. Thermometer according to one of claims 1 and 2, **characterised in that** the measuring chamber (15) is formed by a housing bore (14) which crosses or cuts the passage bore (13) and which is closed at one end by the pressure measuring cell (16).

4. Thermometer according to one of the preceding claims, **characterised in that** the housing bore (14) is produced after insertion of the capillary tube (18) or the filling tube (26) into the passage bore (13).

5. Thermometer according to one of the preceding claims, **characterised in that** the housing (12) of the measuring chamber (15) is part of a carrier element (8) to which the measuring sensor (9) is fastened.

6. Thermometer according to one of the preceding claims, **characterised in that** the pressure measuring cell (16) has a metallic carrier which is connectible by welding or soldering with the housing (12), which similarly consists of a metal.

7. Thermometer according to one of the preceding claims, **characterised in that** the pressure measuring cell (16) comprises a piezoresistive measuring element or a measuring element with a measuring bridge of strain gauges.

8. Thermometer according to claim 7, **characterised in that** the piezoresistive measuring element is acted on directly by the medium, the pressure of which changes in dependence on temperature.

## Revendications

1. Thermomètre comportant un capteur de mesure creux (9) dont la cavité est reliée par un tube capillaire (18) à la cavité d'un convertisseur de mesure mécanique notamment d'un ressort Bourdon (19), le capteur de mesure (9), le tube capillaire (18) et le convertisseur de mesure mécanique étant remplis d'un milieu dont la pression varie en fonction de la température, et le convertisseur de mesure mécanique actionnant un dispositif d'affichage mécanique (5, 6) et/ou un interrupteur (23),
**caractérisé en ce que**
le tube capillaire (18) ou la cavité du convertisseur de mesure mécanique (2) sont reliés en plus à un convertisseur de mesure électrique (9) qui comporte une chambre de mesure (15) entourée par un boîtier (12) de forme rigide, une cellule de mesure de pression (16), électrique, délimitant la chambre de mesure (15) et un transformateur de valeur de mesure (4), électrique relié à la cellule de mesure de pression (16) pour créer un signal transmissible.

2. Thermomètre selon la revendication 1,
**caractérisé en ce que**
le boîtier (12) du convertisseur de mesure électrique (3) comporte un perçage traversant (13) qui passe dans la chambre de mesure (15) et à travers laquelle passe le tube capillaire (18) ou un tube de remplissage (26) relié à la cavité du convertisseur mécanique de mesure (2), le tube capillaire (18) ou le tube de remplissage (26) étant muni à l'intérieur de la chambre de mesure (15) d'une ouverture ou d'une interruption et fixé dans les segments du perçage traversant (13) situés des deux côtés de la chambre de mesure (15) par une liaison soudée, brasée ou collée réalisant une liaison étanche à la pression.

3. Thermomètre selon l'une des revendications 1 ou 2,
**caractérisé en ce que**
la chambre de mesure (15) est formée par un perçage de boîtier (14) qui croise le perçage traversant (13) ou le coupe et dont une extrémité est fermée par la cellule de mesure de pression (16).

4. Thermomètre selon l'une des revendications précédentes,
**caractérisé en ce que**
le perçage (14) du boîtier est réalisé dans le perçage traversant (13) après introduction du tube capillaire (18) ou du tube de remplissage (26).

5. Thermomètre selon l'une des revendications précédentes,
**caractérisé en ce que**
le boîtier (12) de la chambre de mesure (15) fait partie d'un élément de support (8) et est fixé au capteur de mesure (9).

6. Thermomètre selon l'une des revendications précédentes,
**caractérisé en ce que**
la cellule de mesure de pression (16) comporte un support métallique relié par soudage ou brasage au boîtier (12) également en métal.

7. Thermomètre selon l'une des revendications précédentes,
**caractérisé en ce que**
la cellule de mesure de pression (16) comporte un élément de mesure piézorésistant ou un élément de mesure avec un pont de mesure formé de jauges de contrainte.

8. Thermomètre selon la revendication 7,
**caractérisé en ce que**
l'élément de mesure piézorésistant est sollicité directement par le milieu dont la pression varie en fonction de la température.
